# DEMANDE DE BREVET EUROPEEN

(11) **EP 4 560 183 A1**
(43) Date de publication de la demande: **28.05.2025**
(21) Numéro de dépôt: 23315436.8
(22) Date de dépôt: 21.11.2023
(51) Int. Cl.: F21L 4/06, H01M 50/247, H01M 50/262

(54) **BOÎTIER DE PILE/BATTERIE À VERROUILLAGE SÉCURISÉ ET ÉTANCHE, ET LAMPE FRONTALE COMPORTANT LE MÊME**

(71) Demandeur: Zedel, 38920 Crolles (FR)
(72) Inventeur: BORTOLOTTI, Raphaël, 74940 Annecy le Vieux (FR); CARRIER, Jérôme, 74000 Annecy (FR)
(74) Mandataire: Schuffenecker, Thierry

(57) **Abrégé**

Un boîtier de logement de piles/batterie destiné à une lampe frontale, comportant :
un corps de boîtier (10) comportant une face avant, une face arrière dotée d'une charnière (19) et deux faces latérales gauche et droite ;
un couvercle (20) mobile en rotation autour de la charnière définissant un premier axe de rotation ; un second axe de rotation étant défini à l'avant du couvercle pour la rotation d'un levier de verrouillage par rapport au couvercle ;
un levier de verrouillage (30) comportant deux branches gauche (31) et droite (32),
dans lequel la face intérieure de la branche gauche (31) comporte une première broche (33) perpendiculaire et la face intérieure de la branche droite (32) comporte une seconde broche (34) ;
dans lequel lesdites première et seconde broches (33, 34) sont configurées pour venir s'insérer dans des trous borgnes (23, 24) dudit couvercle (20) de façon à réaliser la mise en rotation du levier par rapport au couvercle (20) ;
dans lequel ledit levier (30) en forme de U comporte par ailleurs, sur chacune des deux faces externes des branches gauche et droite (31, 32), une came (35, 36) présentant une forme sensiblement circulaire centrée autour d'un axe commun avec ledit second axe de rotation ;
dans lequel lesdites faces latérales (13, 14) dudit boîtier (10) comportent, au niveau de la partie avant, deux rainures circulaires (15,16) configurées pour venir recevoir le passage desdites cames circulaires (35, 36), respectivement, lorsque le couvercle est en position fermée avec le levier en position déployé et que l'on vient pivoter le levier pour venir insérer les cames circulaires (35,36) dans leurs rainures circulaires respectives (15, 16) assurant un verrouillage par force.

## Description

### Domaine technique de l'invention

La présente invention concerne le domaine des lampes électriques portatives et notamment, un boîtier de piles/batterie doté d'un verrouillage sécurisé et étanche destiné à la réalisation d'une lampe frontale.

### Etat de la technique

Les lampes portatives de type frontale comportent souvent un logement de batterie ou de piles, interne ou externe selon que l'on souhaite déporter à l'arrière le poids de ces batteries ou de ces piles.

Par ailleurs, ces lampes frontales sont destinées à être utilisées en tous temps et en toutes conditions, en sorte que leurs batteries et/ou piles doivent pouvoir être maintenues dans un logement sécurisé et étanche.

A cet effet, on emploie souvent un boîtier doté d'un couvercle que l'on peut venir verrouiller sur le boîtier une fois les piles/batteries mises en place par divers mécanismes et dispositifs divers.

Le poids des batteries s'accroissant et les conditions d'utilisation devenant plus rudes, il est important de pouvoir améliorer le système de verrouillage du boîtier destiné à recevoir le logement pour les piles ou la batterie de manière parfaitement étanche.

En particulier, il est souhaitable de pouvoir disposer d'un verrouillage qui se réalise suivant deux mouvements manuels successifs de manière à assurer à l'utilisateur une parfaite fermeture et étanchéité du boîtier.

Tel est le problème technique à résoudre par la présente invention.

### Exposé de l'invention

C'est un but de la présente invention de proposer un boîtier de logement pour piles ou batterie comportant un couvercle pouvant être fermé de manière sécurisée et étanche au moyen d'un double mouvement manuel.

C'est un autre but de la présente invention de réaliser un boîtier de lampe frontale comportant un capot se verrouillant par un double mécanisme de rotation sécurisant le verrouillage du capot.

C'est un troisième but de la présente invention de proposer un boîtier de lampe frontale comportant un logement pour piles ou batterie parfaitement étanche.

C'est un quatrième but de la présente invention de réaliser une lampe portative dotée d'un système de verrouillage/déverrouillage facile à manipuler et d'une grande sécurité.

La présente invention permet d'atteindre tous ces buts en réalisant un boîtier de logement de piles/batterie destiné à une lampe frontale, comportant :
un corps de boîtier comportant une face avant, une face arrière dotée d'une charnière et deux faces latérales gauche et droite ;
un couvercle mobile en rotation autour d'un premier axe de rotation défini par la charnière, et le couvercle comportant également à l'avant deux trous borgnes définissant un second axe de rotation pour la rotation d'un levier de verrouillage par rapport au couvercle ;
un levier de verrouillage comportant deux branches gauche et droite,
dans lequel la face intérieure de la branche gauche comporte une première broche perpendiculaire et la face intérieure de la branche droite comporte une seconde broche;
dans lequel lesdites première et seconde broches sont configurées pour venir s'insérer dans les trous borgnes du couvercle de façon à permettre la rotation du levier relativement au couvercle ;
dans lequel le levier en forme de U comporte par ailleurs, sur chacune des deux faces externes des branches gauche et droite une came présentant une forme sensiblement circulaire centrée autour du second axe de rotation ;
dans lequel lesdites faces latérales dudit boîtier comportent, au niveau de la partie avant, deux rainures circulaires centrées également sur ledit second axe de rotation, et configurées pour venir recevoir le passage desdites cames circulaires, respectivement, lorsque le couvercle est en position fermée avec le levier en position déployé et que l'on vient pivoter le levier pour venir insérer les cames circulaires dans leurs rainures circulaires respectives assurant un verrouillage par force.

De cette manière, l'on obtient une force de fermeture mieux répartie et cela génère moins de déformation sur les pièces rigides qui rentrent en jeu dans la chaine d'étanchéité. Cela présente un avantage significatif par rapport à un mécanisme plus conventionnel basé sur la combinaison d'un un axe de rotation en bas et d'un clip en haut, qui imposerait de surdimensionner les capots pour qu'ils ne se déforment pas (effet banane) à la fermeture.

Dans un mode de réalisation particulier, le boîtier comporte au niveau du milieu des faces latérales gauche et droite deux éléments pivot réalisant un troisième axe de rotation autour duquel le boîtier peut décrire un mouvement en rotation par rapport à un support fixe.

Dans un autre mode de réalisation particulier, l'assemblage de la charnière est réalisé au moyen de deux trous borgnes matérialisant le premier axe de rotation et configurés pour recevoir deux tiges/broches dudit couvercle.

De préférence, le levier est configuré de manière à venir épouser parfaitement le forme et le profil dudit couvercle (20) lorsque ce dernier est dans la position de verrouillage finalisée.

### Description des dessins

D'autres caractéristiques, but et avantages de l'invention apparaîtront à la lecture de la description et des dessins ci-après, donnés uniquement à titre d'exemples non limitatifs. Sur les dessins annexés :
Les figures 1a et 1b présentent deux vues en perspective avant/arrière d'un corps de boîtier conforme à la présente invention.
Les figures 2a et 2b illustrent deux vues en perspective, avant et arrière, d'un couvercle de boîtier conforme à la présente invention.
Les figures 3a et 3b illustrent deux vues en perspective, avant et arrière, d'un levier de verrouillage conforme à la présente invention.
La figure 4a est une vue montrant une lampe frontale comportant un boîtier, son couvercle et le levier de verrouillage monté sur un support.
La figure 4b est une coupe de la lampe frontale suivant l'axe CAME-CAME de la figure 4a.
La figure 5a est une coupe suivant l'axe LEVIER-LEVIER de la figure 4a.
La figure 5b est une coupe suivant l'axe AXE_LEVIER-AXE_LEVIER de la figure 5a.
Les figures 6a, 6b et 6c montrent trois coupes illustratives du verrouillage du capot au moyen du levier de verrouillage.
Les figures figure 7a-7f illustrent des vues en perspective des différentes phases de déverrouillage du couvercle.
Les figures figure 8a-8gf illustrent les différentes phases de fermeture du boîtier étanche par un utilisateur, mettant en évidence la double rotation exercée lors du verrouillage du boîtier.

### Description des modes de réalisation

On va décrire de manière générale un boîtier destiné à servir de logement pour des piles/batteries servant à l'alimentation électrique d'une lampe frontale.

Dans le but de réduire le poids de la charge portée à l'avant de la tête de l'utilisateur, le boîtier de piles/batteries est conçu pour être déporté à l'arrière de la tête de l'utilisateur afin d'alimenter un circuit électronique de lampe frontale situé à l'avant de ce dernier.

Il est à noter cependant que d'un mode de réalisation particulier et que le boîtier de la présente invention ne saurait se limiter aux seules lampes frontales ayant un boîtier de piles/batteries externe. Clairement, le système de verrouillage novateur qui va être décrit en détail peut être mis en oeuvre au sein même d'une lampe frontale monobloc comportant à la fois le système d'éclairage et le compartiment de piles/batteries.

Plus généralement même, le boîtier et son système de verrouillage est conçu de manière totalement indépendante du système d'éclairage à LED et de son électronique associée. Par conséquent, le boîtier qui va être décrit pourra être associé à tout système d'éclairage quelconque, du plus simple au plus sophistiqué comme, par exemple, celui d'un éclairage intégrant une technologie de type REACTIVE LIGHTING commercialisée par la société PETZL, ou tout éclairage quelconque.

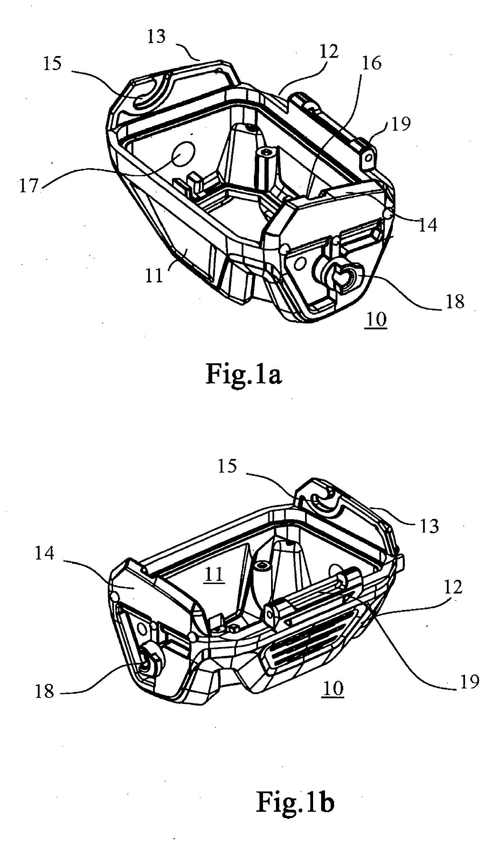

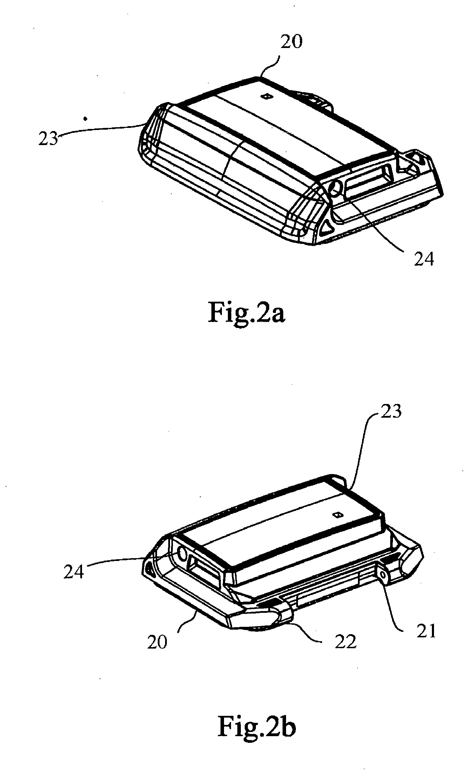

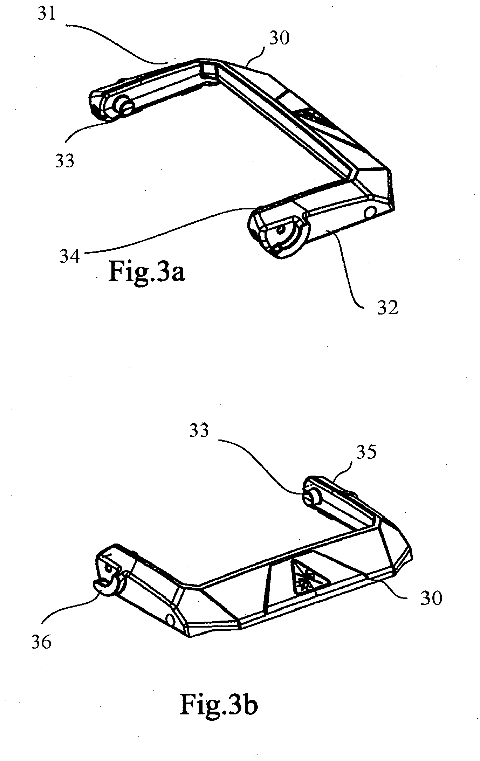

De manière générale le boitier de piles/batterie conforme à la présente invention comporte trois élément constitutifs qui sont respectivement illustrés dans les figures 1a/1b, 2a/2b et 3a/3b, à savoir :
- un corps de boîtier 10 (figures 1a et 1b) ;
- un couvercle de boîtier 20 (figures 2a et 2b) ;
- un levier de verrouillage 30 (figures 3a et 3b) spécifiquement conçu pour permettre le verrouillage du couvercle 20.

Le boîtier selon l'invention comporte un corps de boîtier 10 de forme sensiblement parallélipédique - illustré dans les deux perspectives avant et arrière des figures 1a et 1b respectivement, et destiné à recevoir un logement pour des piles et/ou une batterie.

A cet égard, le corps de boîtier 10 comporte une face avant 11, une face arrière 12 et deux faces latérales gauche 13 et droite 14 venant délimiter au moyen d'un fond associé un logement pour un jeu de piles et/ou une batterie d'alimentation électrique. La face arrière 12 comporte, au niveau de son arête arrière supérieure, un système de liaison 19 avec un couvercle 20, de type charnière, permettant la rotation du couvercle 20 par rapport à un premier axe de rotation sensiblement parallèle à l'arrête arrière supérieure du boîtier.

Dans un mode de réalisation particulier, l'assemblage de la charnière est réalisé au niveau du boîtier au moyen de deux trous borgnes matérialisant le premier axe de rotation et configurés pour recevoir deux tiges/broches du couvercle 20 qui sera décrit plus loin.

L'axe de la charnière 19 mais également les faces latérale gauche 13 et droite 14 se projettent en saillie par rapport aux arêtes supérieures des taxes avant 11 et arrière 12, comme cela apparaît dans les figures 1a et 1b.

Chacune des faces latérales gauche 13 et droite 14 comporte, au niveau de la partie avant du boîtier, une rainure de forme sensiblement circulaire, centrée sur un point définissant un second axe de rotation, dont on décrira plus loin la fonctionnalité.

Enfin, le boîtier comporte au niveau du milieu des faces latérales gauche et droite deux éléments pivot 17 et 18 réalisant un troisième axe de rotation 17-18, autour duquel le boîtier peut décrire un mouvement en rotation par rapport à un support fixe non illustré dans les figures 1a et 1b.

On décrit à présent, en référence aux figures 2a et 2b, le couvercle 20 qui est configuré de manière à fermer, de manière étanche, le boîtier de la figure 1a et 1b. D'une manière générale, le couvercle 19 comporte une face supérieure, deux faces latérales gauche et droite et une face arrière. Dans un mode de réalisation particulier, la face latérale arrière comporte deux trous borgnes 21 et 22 partageant l'axe commun de la charnière 19, et destinés à recevoir une tige de rotation (non décrite) pour la réalisation d'une liaison pivot entre le couvercle 20 et le boîtier 10.

A l'opposé des éléments 21 et 22, le couvercle comporte respectivement dans sa partie supérieure et sur les faces latérales gauche et droite du couvercle 20 un trou circulaire, respectivement 23 et 24, matérialisant le second axe de rotation mentionné précédemment, et configurés pour recevoir deux broches 33 et 34 situés sur les deux extrémités d'un levier 30 en forme de U , de manière à permettre à en permettre la rotation autour du second axe de rotation situé à l'avant du couvercle 20. Le levier 30, illustré dans les figures 3a et 3b, est configuré de manière à venir épouser parfaitement la forme et le profil du couvercle 20 lorsque ce dernier est dans un plan horizontal, finalisant le verrouillage

Le levier 30 en forme de U est illustré plus spécifiquement dans les figures 3a et 3b et comporte respectivement deux branches 31 (gauche) et 32 (droite). La face intérieure de la branche 31 comporte à son extrémité une première broche 33 perpendiculaire tandis que la branche 32 comporte sur sa face intérieure une seconde broche 34 également à son extrémité. Les deux broches 33 et 34 sont destinées à venir s'insérer dans les trous borgnes 23 et 24, respectivement du couvercle 20 de façon à réaliser la liaison pivot du levier 30 par rapport au couvercle 20 suivant le second axe de rotation.

Le levier 30 en forme de U comporte par ailleurs, sur chacune des deux faces externes des branche 31 et 32, une came semi-circulaire, 35 et 36 respectivement, présentant une forme sensiblement circulaire autour d'un axe commun avec le second axe de rotation.

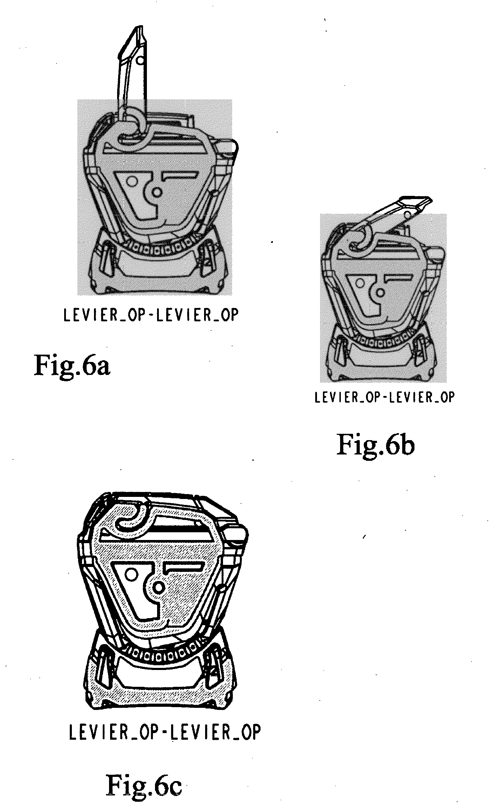

En correspondance, les faces latérales 13 et 14 du boîtier 10 comportent, au niveau de la partie avant, deux rainures circulaires 15 et 16 configurées pour venir recevoir le passage des cames semi-circulaires 35 et 36, respectivement, lorsque le couvercle est en position fermée avec le levier dans un plan vertical comme cela est illustré en figure 6a, et que l'on vient rabaisser le levier vers la droite pour l'amener dans un plan horizontal (figure 6b et figure 6c), ce qui entraîne l'insertion des cames semi-circulaires 35/36 dans leurs rainures circulaires respectives 15 et 16 et assure un verrouillage par force grâce à la coopération entre les cames semi-circulaires 35/36 et les rainures circulaires 15/16.

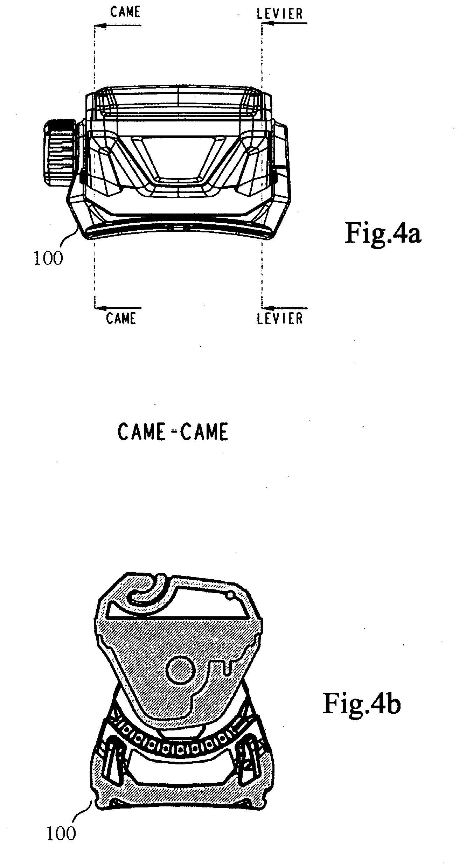

La figure 4a est une vue montrant une lampe frontale comportant un boîtier, son couvercle et le levier de verrouilles monté sur un support 100. Deux vues en coupe, respectivement CAME-CAME et LEVIER -LEVIER y sont définies.

La figure 4b est une coupe de la lampe frontale suivant l'axe CAME-CAME de la figure 4a. On y voit très nettement l'assemblage de la came 35 à l'intérieur de la rainure circulaire 15 de la face latérale 13.

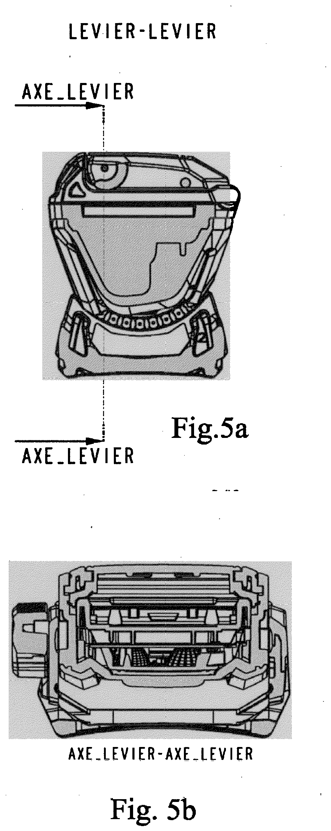

La figure 5a est une coupe suivant l'axe LEVIER-LEVIER de la figure 4a, mettant également en évidence une coupe AXE_LEVIER-AXE_LEVIER dont le détail est illustré en figure 5a.

Les figures 6a, 6b et 6c montrent trois coupes illustratives du verrouillage du capot au moyen du levier de verrouillage, ce levier de verrouillage étant situé dans trois positions différentes : ouvert, semi ouvert, et fermé (verrouillé). On voit nettement que l'abaissement du levier permet de réaliser l'assemblage décrit précédemment entre les cames 35/36 et les rainures circulaires 15/16, de façon à assurer une fermeture étanche et efficace du couvercle. On notera en particulier que l'étanchéité parfaite pourra être réalisée au moyen d'un ou plusieurs joints disposés sur le couvercle, dont le détail ne fait pas partie de la présente invention.

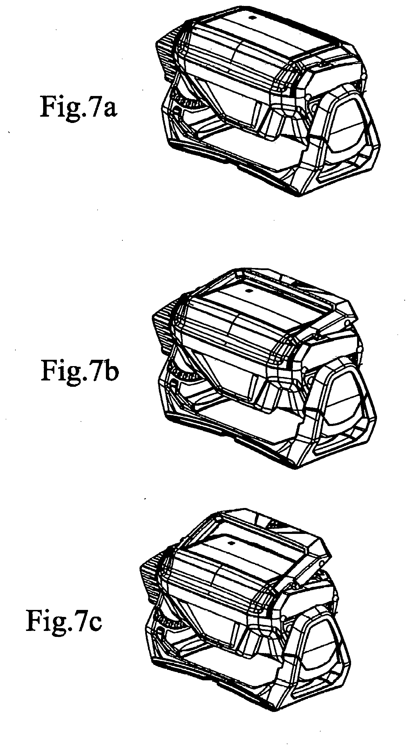

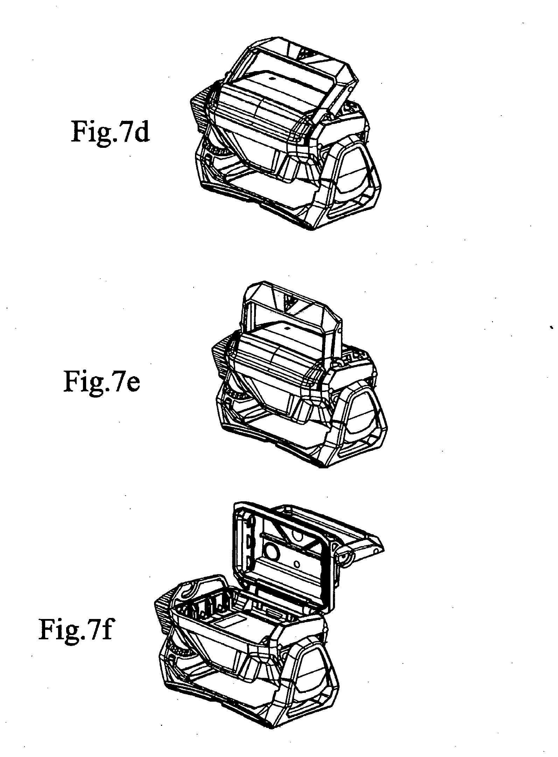

Les figures figure 7a-7f illustrent des vues en perspective des différentes phases de déverrouillage du couvercle.

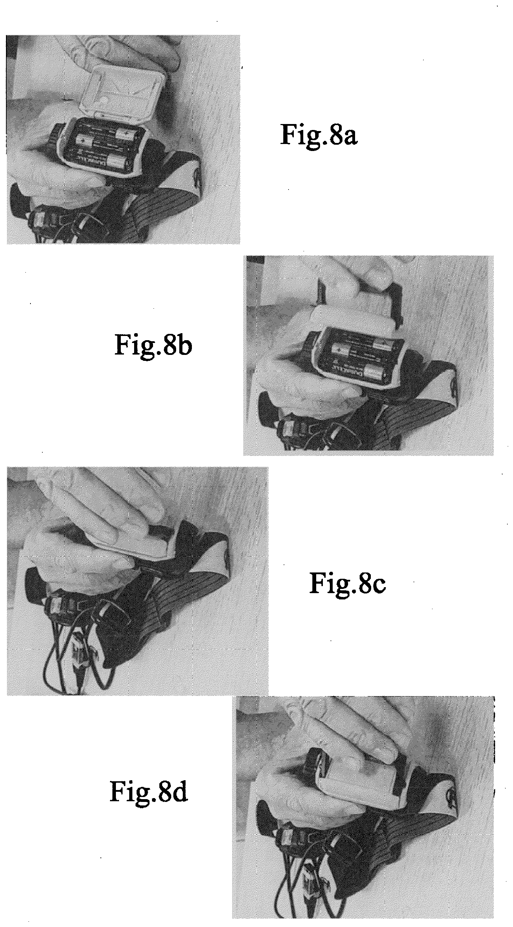

Les figures figure 8a-8gf illustrent les différentes phases de fermeture du boîtier étanche par un utilisateur, mettant en évidence la double rotation exercée lors du verrouillage du boitier.

Plus spécifiquement la Figure 8a montre le boîtier ouvert, dans lequel est venu se loger un jeu de trois piles bâtons.

Dans la figure 8b, l'utilisateur commence à fermer le boîtier en venant pivoter le couvercle autour de la charnière 19. La rotation du couvercle se poursuit jusqu'au bout de sa course, comme on le voit dans la figure 8c.

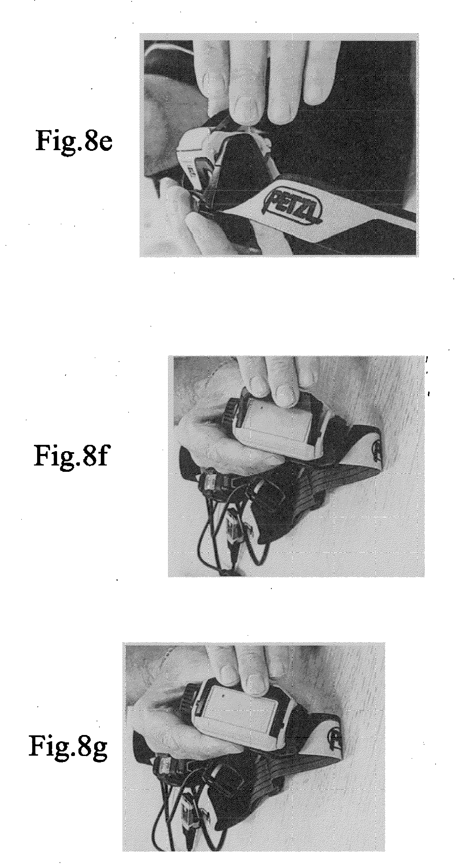

Puis , comme cela apparaît dans les figures 8d et 8e, l'utilisateur exerce une pression sur le couvercle tout en commençant à faire pivoter le levier autour du second axe de rotation de manière à faire pénétrer les cames circulaires 35/36 dans leurs rainures circulaires correspondantes 15/16.

En venant abaisser le levier jusqu'au bout de la course, comme cela est illustré dans les figures 8f et 8g, l'utilisateur peut venir fermer le boîtier de manière sécurisée et parfaitement étanche grâce à la combinaison des joints internes au couvercle 20 (non représenté), et de la pression exercée par la coopération des cames circulaires 35/36 dans leurs rainures circulaires correspondantes 15/16.

## Revendications

**1.** Un boîtier de logement de piles/batterie destiné à une lampe frontale, comportant :
un corps de boîtier (10) comportant une face avant (11), une face arrière (12) et deux faces latérales gauche et droite (13, 14),
dans lequel ladite face arrière (12) comportant une charnière (19) permettant la rotation d'un couvercle 20 par rapport à un premier axe de rotation sensiblement parallèle à l'arête arrière supérieure ;
dans lequel chacune des faces latérales gauche et droite (13, 14) comporte, au niveau de la partie avant dudit boîtier, une rainure de forme sensiblement circulaire (15, 16) centrée sur un point définissant un second axe de rotation ;
ledit couvercle de boîtier (20) comporte une face supérieure, deux faces latérales gauche et droite et une face latérale arrière,
dans lequel ladite face latérale arrière comportant une liaison pivot permettant la mise en rotation du couvercle autour dudit premier axe ;
dans lequel ledit couvercle (20) comporte respectivement sur les faces latérales gauche et droite un trou borgne (23, 24) matérialisant ledit second axe de rotation, et configurés pour recevoir deux broches (33, 34) situés sur les deux extrémités d'un levier (30) en forme de U de manière à permettre à en permettre la rotation autour du second axe de rotation
ledit levier de verrouillage (30) comportant deux branches gauche (31) et droite (32),
dans lequel la face intérieure de la branche gauche (31) comporte une première broche (33) perpendiculaire et la face intérieure de la branche droite (32) comporte une seconde broche (34) ;
dans lequel lesdites première et seconde broches (33, 34) sont configurées pour venir s'insérer dans lesdits trous borgnes (23, 24) dudit couvercle (20) de façon à compléter une liaison pivot dudit levier (30) par rapport audit couvercle (20) autour dudit second axe de rotation;
dans lequel ledit levier (30) en forme de U comporte par ailleurs, sur chacune des deux faces externes des branches gauche et droite (31, 32), une came (35, 36) présentant une forme sensiblement circulaire centrée autour dudit second axe de rotation ;
dans lequel lesdites faces latérales (13, 14) dudit boîtier (10) comportent, au niveau de la partie avant, deux rainures circulaires (15,16) centrées autour du second axe de rotation, et configurées pour venir recevoir le passage desdites cames circulaires (35, 36), respectivement, lorsque le couvercle est en position fermée avec le levier en position déployé et que l'on vient pivoter le levier pour venir insérer les cames circulaires (35,36) dans leurs rainures circulaires respectives (15, 16) assurant un verrouillage par force.

**2.** Le boîtier selon la revendication 1 dans lequel ledit boîtier comporte au niveau du milieu des faces latérales gauche et droite deux éléments pivot (17, 18) réalisant un troisième axe de rotation autour duquel le boîtier peut décrire un mouvement en rotation par rapport à un support fixe.

**3.** Le boîtier selon la revendication 2, **caractérisée en ce que** l'assemblage de ladite charnière (19) est réalisé au moyen de deux trous borgnes matérialisant le premier axe de rotation et configurés pour recevoir deux tiges/broches dudit couvercle (20).

**4.** Le boîtier selon la revendication 3 dans lequel ledit levier (30) est configuré de manière à venir épouser parfaitement le forme et le profil dudit couvercle (20) lorsque ce dernier est dans la position de verrouillage finalisée.

**5.** Le boîtier selon l'une quelconque des revendications précédentes, dans lequel le boîtier réalise un logement de piles/batteries externes permettant l'alimentation électrique déportée d'une lampe frontale.

**8.** Le boîtier selon l'une quelconque des revendications 1 à 4 , dans lequel le boîtier comporte un système d'éclairage ainsi qu'un logement de piles ou de batterie.

**9.** Lampe portative, telle qu'une lampe frontale, comportant un boîtier tel que défini dans l'une quelconque des revendications 1 à 4.
